Europäisches Patentamt

European Patent Office

Office européen des brevets

(11) Publication number: **0 485 601 A1**

# EUROPEAN PATENT APPLICATION
## published in accordance with Art. 158(3) EPC

(21) Application number: 90908666.2

(22) Date of filing: 30.05.90

(86) International application number:
**PCT/JP90/00702**

(87) International publication number:
**WO 91/18767 (12.12.91 91/28)**

(51) Int. Cl.5: **B60R 21/16**

(43) Date of publication of application:
**20.05.92 Bulletin 92/21**

(84) Designated Contracting States:
**DE FR GB**

(71) Applicant: **TAKATA KABUSHIKI KAISHA**
**4-30, Roppongi 1-chome**
**Minato-ku, Tokyo 106(JP)**

(72) Inventor: **NAKAJIMA, Hideo 915-29, Hida-cho**
**Hikone-shi**
**Shiga 521-11(JP)**

Inventor: **SATOH, Ryo 1290-4, Nagano**
**Echigawa-cho**
**Echi-gun**
**Shiga 529-13(JP)**
Inventor: **NAKAZAWA, Tamiji 134, Nakaya**
**Azuchi-cho**
**Gamou-gun**
**Shiga 521-13(JP)**

(74) Representative: **Bubb, Antony John Allen**
**GEE & CO. Chancery House Chancery Lane**
**London WC2A 1OU(GB)**

(54) **AIR BAG UNIT.**

(57) An air bag unit provided with an air bag (1) which is formed of a woven fabric, consists of first and second base cloths (1a, 1b) having their peripheries sewed to each other and is inflated by a high-pressure gas ejected from an inflator actuated in an emergency, wherein stitch opening restriction means (a, b) are disposed over predetermined ranges at the sewed portions of the first and second base cloths (1a, 1b) positioned in the first folding direction of the air bag (1). Those portions of the sewed portions, at which stitch opening concentrates most intensively, can be protected from the stitch opening phenomenon reliably and effectvely by the stitch opening restriction means (a, b). Moreover, since these means (a, b) are disposed at the portions at which stitch opening is most likely to occur but are not disposed at other portions, the materials necessary for these means (a, b) can be saved drastically.

Moreover, the sewed portions of the base cloths are not thick and the air bag is not bulky even when it is folded.

FIG. 1(A)

# FIG. 1(B)

Sewn portion
a
1
1b
1a
b

FIELD OF THE INVENTION

The present invention relates to an air bag unit for protecting an occupant in a vehicle by absorbing the shock occurred at vehicle collision, and in particular to an air bag in an air bag unit for receiving the occupant by inflating with high-pressure gas from an inflator.

TECHNICAL BACKGROUND

An air bag unit installed in a fixed portion of a car body in front of a seat of a vehicle plays a very important part in protecting an occupant from being injured by colliding against the car body in an emergency such as vehicle collision, by inflating instantly with the pressure of reaction gas from an inflator fixed at a fixed portion of the car body such as a steering handle or lower part of an instrument panel.

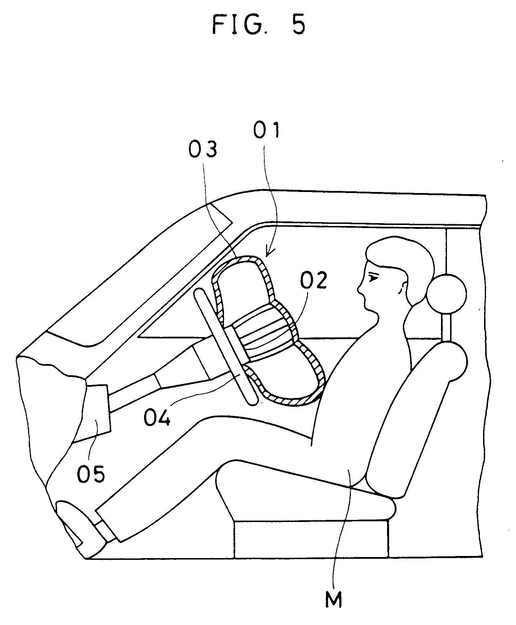

As shown in Fig. 5, such an air bag unit 01 comprises an inflator 02, which gushes out gas by triggering a gas generator according to a collision signal sent from a collision detecting sensor when, for example, decerelation rate of the vehicle exceeds a certain value, and an air bag 03, whose base is fixed to the inflator 02 and which is inflated with the gas from the inflator 02. With the air bag 03 folded and tucked into a pad, this air bag unit 01 is installed, for example, at the center of a steering wheel 04 or to a fixed part of the vehicle such as an instrument panel 05.

At vehicle collision, the air bag 03 is inflated instantly with the gas generated by the reaction of the gas generator in the inflator 02, as shown in Fig. 5. Thus, the air bag 03 protects an occupant M from being collided against the car body by receiving the occupant M who is moved forward by inertia.

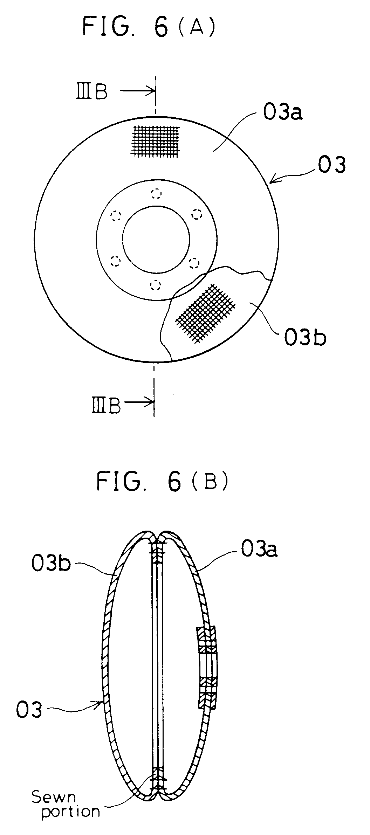

By the way, an air bag 03 furnished face-to-face to the driver of the air bag 03 in the air bag unit is formed by sewing up each of the outer peripheral edges of an approximately circular front side base cloth 03a attached on the inflator, and of an approximately circular rear side base cloth 03b arranged face-to-face to the driver as shown in Fig. 6 (A), (B). In this case, the base cloths 03a and 03b are made from woven cloth consisting of warps and wefts, and the base cloths are sewn up in such manner that the direction of the warps and the wefts of the front side base cloth 03a and the direction of the warps and the wefts of the rear side base cloth 03b cross at an angle of 45°. Since the sarps and the wefts of the front side base cloth 03a and the rear side base cloth 03b cross approximately at 45°, the air bag 03 can be inflated rounder and more uniformly and can receive the occupant more effectively, who is moved forward.

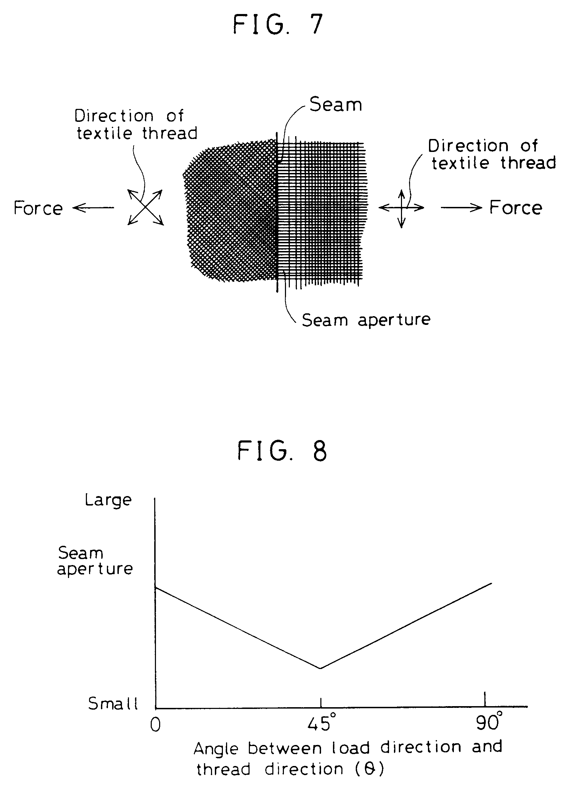

However, when such an air bag 03 is inflated by hot reaction gas from the inflator 02, the coating material coated on the base cloths is softened by the reaction gas or the temperature and the power of the reaction gas is increased because of the temperature dependency of the reaction gas. When the coating material is softened and high power reaction gas is generated at the same time as described above, a so-called "opening" phenomenon occurs in which the texture of the woven cloth is deviated at the sewn portion as shown in Fig. 7. In this case, the extent of the openings changes depending on the relative angle $\theta$ between the direction of the thread and the direction of the load applied on the woven cloth. That is, openings on the sewn portion occur to the largest extent particularly on the portion where the direction of the thread concurs with the direction of the load applied on the woven cloth (0° and 90°), whereas less openings on the sewn portion occur on the portion where the thread direction and the load direction cross each other because the base cloths expand and contract due to elasticity of the texture of the woven cloths. Especially, on the portion where the thread direction and the load direction cross at 45°, the extent of the openings on the sewn portion is at the smallest. Accordingly, in the air bag of Fig. 7, openings occur near the sewn portion of a base cloth where the load direction concurs with the thread direction.

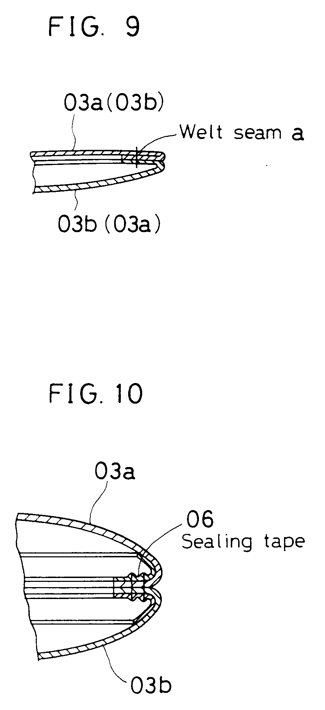

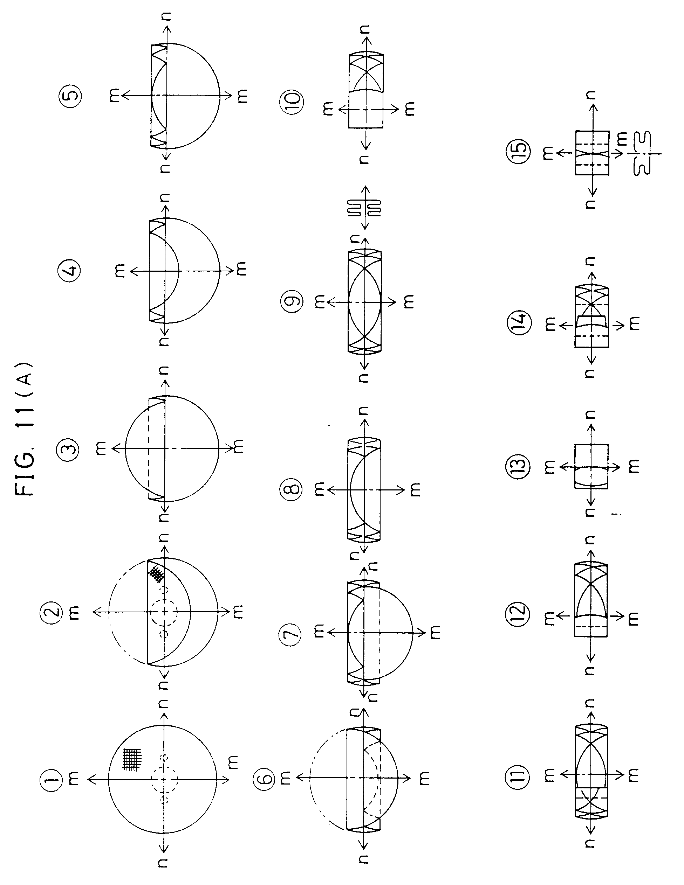

Conventional means to prevent the above opening phenomenon are to sew further the sewn portion and the base cloth by seam felling "a" over total periphery as shown in Fig. 9 and to attach thin film sealing tape 06 over total periphery as shown in Fig. 10.

However, such means include additional sewing process and tape attaching process, etc. which impair workability and result in higher cost. Another problem is that the package volume becomes inevitably bigger since the sewn portion, already relatively thick, becomes thicker by sewing or taping and requires more space or bigger package volume for storing the folded air bag.

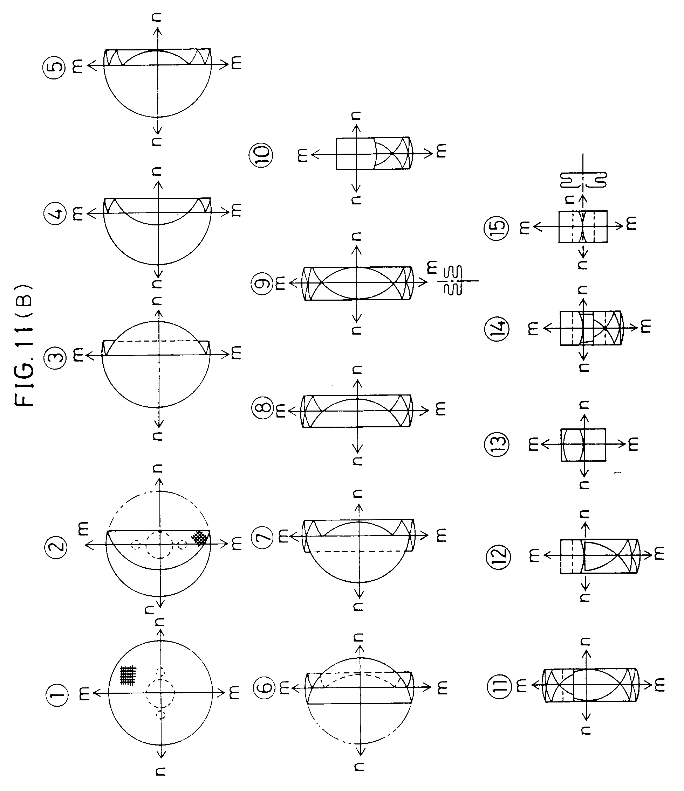

After the detailed analysis and study on the trends of occurrence of openings on the sewn portion, it was discovered that the openings occur in the bag inflation process and that they occur in a particular area depending on how the bag is folded. That is, if vertical direction "m" and horizontal direction "n" of the air bag 03 is defined as the vertical and horizontal directions of an air bag fixed on a vehicle respectively as shown in (A), (B) in Fig. 11, the air bag 03 is generally folded either vertically at first (i.e. either from above to below or vice versa in the vertical direction "m") or is folded horizontally at first (i.e. either from the right to the left or vice versa in the horizontal direction "n"). It is shown that when the air bag 03 is folded in the vertical direction "m" at first, openings occur mainly on the sewn portions located in upper or lower parts of the vertical direction "m". On the other hand, when the air bag is folded in the horizontal direction "n" at first, openings occur mainly on the sewn portions located in the right or left parts of the horizontal direction "n".

Therefore, the conventional means to prevent the openings, such as the increasing of the absolute strength of the sewn portions by felling over total periphery, or attaching thin film sealing tape over total periphery of the sewn portion to prevent the leakage of hot gas from the openings, are not very effective, since these means unnecessarily cover those portions which do not need such care.

To solve the above problems, the object of the present invention is to provide an air bag unit which can be furnished effectively and easily with opening inhibition means such as seam felling or attaching of sealing tape and which can inhibit the opening effectively and perfectly.

It is another object of the present invention to provide an air bag unit which is not bulky when folded and can be manufactured at lower cost.

DISCLOSURE OF THE INVENTION

To attain the above objects, an air bag according to the present invention comprises a first base cloth and a second base cloth made of woven cloth, total periphery thereof being sewn up, characterized in that opening inhibition means are provided at sewn portion of said first base cloth and said second base cloth located in a direction of a first folding direction.

Also, the above air bag is characterized in that said first folding direction of said air bag is either vertical or horizontal when said air bag is installed.

In an air bag with the above arrangement according to the present invention, the area where opening phenomenon mainly occurs is protected perfectly and effectively by this opening inhibition means because opening inhibition means are provided at the sewn portion of the base cloth of the air bag located in the first folding direction when the air bag is installed.

Moreover, the opening inhibition means are provided only in the areas where openings mainly occur and not in other areas. This makes the work for providing the opening inhibition means relatively easier and is helpful to spare the material for the opening inhibition means as well. This leads to the manufacture of the air bags at lower cost. Moreover, since the sewn portions of the base cloths does not become thick and are not bulky even when the air bag is folded up, the package volume of the air bag can be reduced.

BRIEF DESCRIPTION OF THE DRAWINGS

Fig. 1 shows an embodiment of an air bag of an air bag unit according to the present invention, where (A) is a front view thereof, and (B) is a cross-sectional view along the line IB - IB in (A);
Fig. 2 is a drawing similar to Fig. 1 illustrating another embodiment of the present invention;
Fig. 3 is a drawing similar to Fig. 1 showing another embodiment of the present invention;
Fig. 4 is a drawing similar to Fig. 1 illustrating still another embodiment of the present invention;
Fig. 5 is a drawing of a common air bag unit installed on an automobile;
Fig. 6 is a drawing of a conventional type air bag unit;
Fig. 7 is a drawing partially showing the opening phenomenon;
Fig. 8 is a drawing showing the extent of openings in relation to the angle between a thread direction of a base cloth and a load direction;
Fig. 9 is a drawing of a conventional means to prevent the openings on the sewn portion;
Fig. 10 is a drawing of another conventional means to prevent the openings; and
Fig. 11 is a drawing illustrating how to fold an air bag.

DETAILED DESCRIPTION OF THE PREFERRED EMBODIMENTS

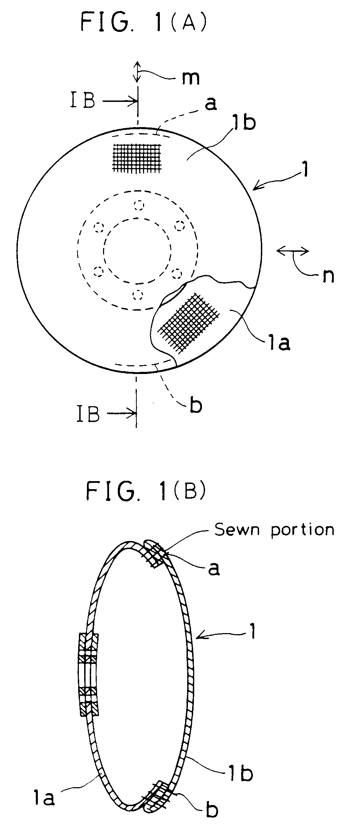

Like the conventional type air bag shown in Fig. 6, the air bag 1 of this embodiment shown in Fig. 1, is formed by sewing up over total periphery of a circular base cloth 1a on the front side (on which an inflator is installed) and a circular rear side base cloth 1b, whereby warps and wefts of the front side base cloth 1a and warps and wefts of the rear side base cloth 1b cross each other at an angle of approximately 45°.

As shown in Fig. 1, the air bag 1 is installed in such manner that the directions of the warps and wefts of the front side base cloth 1a run at an angle of 45° to the vertical direction "m" and the horizontal direction "n", and that the direction of the warps agrees with the vertical direction, and the direction of the wefts agrees with the horizontal direction. In the predetermined areas of the sewn portion of the base cloths 1a and 1b in the vertical direction, seam fellings "a" and "b" are sewn, as shown in (A) and (B) of Fig. 1. That is, the sewn portion of the front side base cloth 1a and the rear side base cloth 1b are partially sewn up with the rear side base cloth 1b. This increases the absolute strength of the sewn portion. Particularly, the areas near the sewn portion of the warps of the rear side base cloth 1b are reinforced.

An air bag 1 with above arrangement according to the present invention is folded, for example, as shown in Fig. 11 (A), at first vertically in the direction "m", and then horizontally in the direction "n" and is stored in a pad.

The air bag 1 is inflated with the reaction gas gushed from the inflator which functions at vehicle collision. In this case, openings occur mainly at the sewn portion located in the vertical direction "m" on the rear side base cloth 1b since the first folding direction agrees with the vertical direction "m". That is, when the air bag 1 is inflated, a bag force is applied in the vertical direction of the warps of the sewn portion of the rear side base cloth, which is located in vertical direction on the air bag 1.

However, since the warps of this area of the sewn portion are reinforced by partial seam fellings "a" and "b", openings on the sewn portion are inhibited perfectly even if said bag force is applied on it. In this way, the seam fellings "a" and "b" constitute the opening inhibition means in this embodiment according to the present invention.

Thus, in this embodiment, openings are effectively inhibited because only the portions where openings mainly occur are sewn with seam fellings "a" and "b". Moreover, since the sewn portion is not felled over total periphery of the base cloths, the working processes are minimized and much simplified, and the folded air bag does not become bulky because the sewn portions are not particularly thick. This means the reduction in the package volume of the air bag 1. If the air bag is installed in such manner that its first folding direction agrees with the thread direction of the front side base cloth 1a, the sewn portion and the front side base cloth 1a should be felled together ("a", "b"). The extent of the seam fellings "a" and "b" is determined according to the power of the inflator.

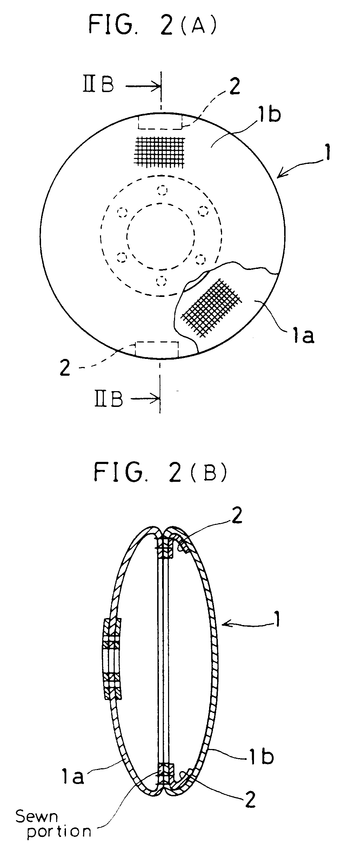

Fig. 2 is a drawing of another embodiment of the present invention.

In this embodiment, the air bag 1 is installed and folded in the same way as in the above embodiment shown in Fig. 1.

In the present embodiment, a sealing tape 2, like the sealing tape 06 shown in Fig. 10, is attached to the inner side of the rear side base cloth 1b including the sewn portion to a predetermined extent. The near area of the sewn portion of the rear side base cloth 1b is reinforced and its seam and texture are sealed completely by the sealing tape 2.

Therefore, openings are inhibited even when a big force is applied vertically on them because warps of the rear side base cloth 1b are reinforced by the sealing tape 2. Even if openings should occur to a less extent, leakage of reaction gas is prevented, because the areas of openings are sealed with the sealing tape 2. Thus, the sealing tape 2 constitutes the opening inhibition means in this embodiment according to the present invention.

In this embodiment, the tape attaching process is largely simplified compared with the conventional process where sealing tape was attached over total periphery of the sewn portion of the base cloth 1b because the sealing tape 2 is attached only to the areas where openings of the sewn portion of the base cloths mainly occur. Moreover, since the sealing tape 2 needed is relatively short, material for the sealing tape is economized and the air bag is not bulky when folded up. The length of the sealing tape attachment is determined according to the output of the inflator.

Instead of a sealing tape 2, a sealant may be sprayed to coat the sewn portion where sealing tape is supposed to be attached.

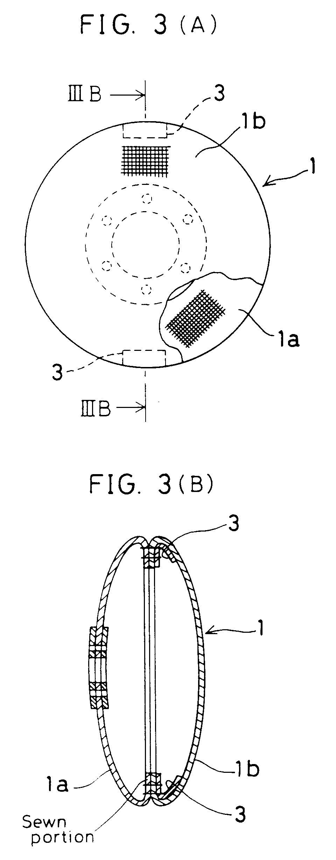

Fig. 3 is a drawing of still another embodiment of the present invention. In this embodiment, the air bag 1 is installed in the same way as in the above embodiments.

In the present embodiment, instead of the sealing tape 2 of the embodiment shown in Fig. 2, a reinforcement cloth 3 is attached at almost the same position. That is, after the reinforcement cloth 3 is attached, for example by sewing, to a predetermined extent of upper and lower part of outer peripheral edge, which is the sewn portion of the rear side base cloth 1b, the front side base cloth 1a and the rear side base cloth 1a are sewn together. Thus, by attaching the reinforcement cloth 3, openings on the sewn portion of the rear side base cloth 1b are prevented.

Thus, the reinforcement cloth 3 constitutes the opening inhibition means in this embodiment of the present invention.

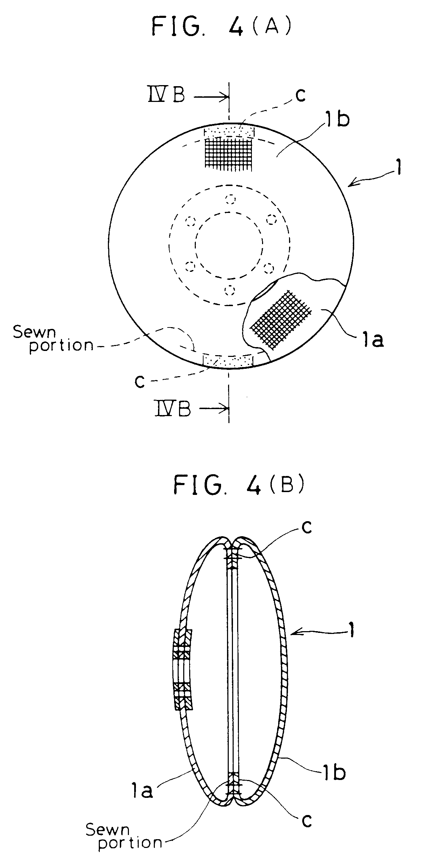

Fig. 4 is a drawing of yet still another embodiment of the present invention. In this embodiment, the air bag 1 is installed and folded in the same way as in the above embodiments.

In this embodiment, upper and lower parts of the sewn portion of the front side base cloth 1a and the rear side base cloth 1b are bonded together by an adhesive "c", and the total periphery of outer edges of the base cloths are sewn together. In this embodiment, since the areas where openings mainly occur are bonded by the adhesive "c", texture shift is perfectly prevented.

Thus, the adhesive "c" constitutes the opening inhibition means in this embodiment according to the present invention.

The present invention is not limited to the above embodiments, and various changes in design can be conceived.

For example, although the air bag 1 in the above embodiments is installed in such manner that the directions of warps and wefts of the rear side base cloth 1b agree with either the vertical direction "m" or the horizontal direction "n", the present invention can be applied to an air bag unit where the air bag 1 is installed in such manner that the direction of warps of the front side base cloth concurs with the vertical direction "m", and warps and wefts of the rear side base cloth 1b cross bias with the vertical direction "m" at an angle of 45°. In this case, it is needless to say that the sealing tape 2, the sealant and the reinforcement cloth 3 should be attached to the front side base cloth 1a because openings occur in the front side base cloth 1a.

Although the first folding direction of the air bag 1 concurs with the vertical direction "m" in each of the above embodiments, the present invention can be applied to the air bag unit where the air bag 1 is folded first in the horizontal direction "n". Further, the air bag 1 may be folded in the direction other than the vertical direction "m" or the horizontal direction "n". In this case, the opening inhibition means should be applied to the sewn portion located in the folding direction. Important is that the air bag should be folded first in the direction where the opening inhibition means of the sewn portion of the base cloths are provided when the air bag is installed.

APPLICABILITY FOR THE INDUSTRY

The air bag in an air bag unit according to the present invention can be used on a vehicle and applied for the purpose of protecting the occupant by absorbing the shock, which occurs when the vehicle is collided.

**Claims**

1. An air bag in an air bag unit, comprising a first and a second base cloths made of woven cloth, outer peripheries thereof being sewn together, inflated with high-pressure gas from an inflator operating in an emergency, characterized in that:
   the sewn portion of said first and second base cloths located in the first folding direction of said air bag is provided with opening inhibition means over a predetermined extent.

2. An air bag unit according to claim 1, wherein said first folding direction of said air bag concurs with either vertical or horizontal direction of said air bag when installed.

FIG. 1(A)

FIG. 1(B)

FIG. 2(A)

FIG. 2(B)

## FIG. 3 (A)

## FIG. 3 (B)

## FIG. 4 (A)

## FIG. 4 (B)

FIG. 5

FIG. 6 (A)

IIIB →

03a

03

03b

IIIB →

FIG. 6 (B)

03b

03a

03

Sewn portion

# FIG. 7

Direction of
textile thread

Seam

Direction of
textile thread

Force ←

→ Force

Seam aperture

# FIG. 8

Large

Seam
aperture

Small

0          45°          90°

Angle between load direction and
thread direction (θ)

## FIG. 9

03a(03b)

Welt seam a

03b(03a)

## FIG. 10

03a

06
Sealing tape

03b

FIG. 11(A)

EP 0 485 601 A1

FIG.11(B)

# INTERNATIONAL SEARCH REPORT

International Application No PCT/JP90/00702

**I. CLASSIFICATION OF SUBJECT MATTER** (if several classification symbols apply, indicate all) 6

According to International Patent Classification (IPC) or to both National Classification and IPC

Int. Cl$^5$       B60R21/16

**II. FIELDS SEARCHED**

| Minimum Documentation Searched 7 | |
|---|---|
| Classification System | Classification Symbols |
| IPC | B60R21/16-21/32 |

Documentation Searched other than Minimum Documentation
to the Extent that such Documents are Included in the Fields Searched 8

| | |
|---|---|
| Jitsuyo Shinan Koho | 1964 - 1990 |
| Kokai Jitsuyo Shinan Koho | 1971 - 1990 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| A | JP, U, 50-137735 (Asahi Chemical Industry Co., Ltd.), 13 November 1975 (13. 11. 75), Drawing (Family: none) | 1, 2 |
| A | JP, Y2, 60-6367 (Okamoto & Co., Ltd.), 28 February 1985 (28. 02. 85), Lines 23 to 27, column 1 to lines 3 to 10, column 2 (Family: none) | 1, 2 |
| A | JP, U, 63-34751 (Takata K.K.), 5 March 1988 (05. 03. 88), (Family: none) | 1, 2 |
| A | JP, B2, 51-31659 (Toyoda Boshiki K.K., Toyota Motor Corp., Toyoda Kenkyusho K.K.), 8 September 1976 (08. 09. 76), (Family: none) | 1, 2 |
| A | JP, U, 58-22360 (Honda Motor Co., Ltd.), 12 February 1983 (12. 02. 83), (Family: none) | 1, 2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| August 20, 1990 (20. 08. 90) | September 3, 1990 (03. 09. 90) |
| International Searching Authority | Signature of Authorized Officer |
| Japanese Patent Office | |

Form PCT/ISA/210 (second sheet) (January 1985)